# EUROPÄISCHE PATENTSCHRIFT

(11) **EP 0 943 395 B1**
(45) Veröffentlichungstag und Bekanntmachung des Hinweises auf die Patenterteilung: **13.08.2003**
(21) Anmeldenummer: 99810217.2
(22) Anmeldetag: 11.03.1999
(51) Int. Cl.: B23Q 11/00

(54) **Bohrgerät mit Absaugvorrichtung**
Drilling tool with suction device
Perçeuse munie d'un aspirateur

(30) Priorität: 17.03.1998 DE 19811437
(43) Veröffentlichungstag der Anmeldung: 22.09.1999
(73) Patentinhaber: HILTI Aktiengesellschaft, 9494 Schaan (LI)
(72) Erfinder: Thanner, Thomas, 81245 München (DE); Niedermann, Peter, 9213 Hauptwil (CH); Roth, Peter, 86938 Schondorf (DE)
(74) Vertreter: Wildi, Roland

(56) Entgegenhaltungen:
- DE-U- 8 813 719

## Beschreibung

Die Erfindung betrifft ein Bohrgerät gemäss dem Oberbegriff des Patentanspruchs 1.

Bei der Herstellung von Bohrungen in einem harten Untergrund wie Beton, Gestein, Stahl oder dergleichen wird ein Kühlmittel zum Kühlen des Werkzeuges und zum Abtransport des Bohrkleins verwendet. Damit der Bereich um die Bearbeitungsstelle möglichst sauber gehalten werden kann, werden beispielsweise Absaugvorrichtungen in Form eines Absaugkopfes verwendet, der den bearbeitungsseitigen Endbereich des Werkzeuges umgibt, die Bearbeitungsstelle nach aussen hin abdichtet und über einen Absaugstutzen mit einer externen Einrichtung zur Erzeugung eines Unterdruckes in Verbindung steht.

Der Verbindung dieses Absaugkopfes mit dem Gehäuse eines Bohrgerätes dient beispielsweise, wie dies das DE-GM 8 813 719 offenbart, eine einen Zylinder und eine Kolbenstange aufweisende Gasfeder, wobei der Zylinder an dem Gehäuse des Bohrgerätes befestigt ist und der Absaugkopf mit dem freien Endbereich der Kolbenstange in Verbindung steht. Die Kolbenstange und der diese umgebende Dichtungsbereich unterliegen aufgrund ihrer freiliegenden Anordnung einer Verschmutzung, die nicht nur zu einem schnellen Verschleiss des Dichtungsbereiches und zu einer Oberflächenbeschädigung der Kolbenstange, sondern auch zu Funktionsstörungen der gesamten Einrichtung führen.

Der Erfindung liegt die Aufgabe zugrunde, ein Bohrgerät mit einer Absaugvorrichtung zu schaffen, bei dem die massgebenden Teile der mit der Absaugvorrichtung in Verbindung stehenden Gasfeder vor Verschmutzung geschützt sind und daher eine hohe Lebensdauer aufweisen, wobei zudem die Funktionssicherheit der gesamten Einrichtung gewährleistet ist.

Die Lösung dieser Aufgabe erfolgt durch ein Bohrgerät, welches die im kennzeichnenden Abschnitt des Patentanspruchs 1 angeführten Merkmale aufweist. Aufgrund der erfindungsgemässen Anordnung der Gasfeder ist deren Kolbenstange und der die Kolbenstange umgebende, an dem Zylinder angeordnete Dichtungsbereich vor Verschmutzungen vollständig geschützt. Um ein Verschwenken der Absaugvorrichtung aus einer koaxialen Lage gegenüber einem Werkzeug verhindern zu können, sind verdrehsichernde Mittel vorgesehen, die beispielsweise von einer an dem Zylinder der ersten Gasfeder angeordneten Leiste und einer entsprechenden Längsnut in der Aufnahmeöffnung des Gehäuses gebildet sind.

Zum Zwecke einer guten Abstützung der ersten Gasfeder und einer sicheren Führung der Absaugvorrichtung wirkt der Zylinder der ersten Gasfeder mit der Absaugvorrichtung zusammen und die Kolbenstange der ersten Gasfeder stützt sich an einer in Bohrrichtung weisenden Anschlagfläche der ersten Aufnahmeöffnung ab.

Zum Zwecke der Erreichung eines grossen Verschiebeweges der Absaugvorrichtung, der grösser ist als der grösstmögliche Hub einer. Gasfeder, ist am Bohrgerät zweckmässigerweise eine zweite, zur ersten Gasfeder hintereinander geschaltete, mit der Absaugvorrichtung zusammenwirkende Gasfeder vorgesehen, wobei die Gasfedern über ein Verbindungselement miteinander in Verbindung stehen.

Damit auch die Kolbenstange der zweiten Gasfeder von Verschmutzungen freigehalten werden kann, ist vorteilhafterweise die zweite Gasfeder-in einer von dem Verbindungselement entgegen der Bohrrichtung abragenden Aufnahmehülse angeordnet, die wenigstens teilweise Aufnahme in einer zweiten Aufnahmeöffnung des Gehäuses findet.

Um eine Verdrehung der zweiten Gasfeder gegenüber der drehfest mit dem Verbindungselement verbundenen Aufnahmehülse verhindern zu können, wirken zwischen der zweiten Gasfeder und der Aufnahmehülse verdrehsichemde Mittel.

Zum Zwecke einer guten Abstützung der zweiten Gasfeder und einer sicheren Führung der Absaugvorrichtung ist vorzugsweise der Zylinder der zweiten Gasfeder mit der Absaugvorrichtung verbunden und die Kolbenstange der zweiten Gasfeder stützt sich an einer in Bohrrichtung weisenden Anschlagfläche der Aufnahmehülse ab.

Um Werkzeuge in dem Bohrgerät einsetzen zu können, deren Länge im wesentlichen dem Hub einer Gasfeder entspricht, ist es notwendig, dass sich nur die zweite Gasfeder in die ausgefahrene Stellung begeben kann. Die erste Gasfeder muss daher in einer eingefahrenen, vorgespannten Stellung in der ersten Aufnahmeöffnung verbleiben. Dies wird zweckmässigerweise dadurch erreicht, dass das Verbindungselement formschlüssig am Gehäuse festlegbar ist.

Aus Gründen einer sicheren und einfachen Handhabung dient zweckmässigerweise der formschlüssigen Verbindung eine entgegen der Bohrrichtung weisende Anschlagkante des Gehäuses und ein an dem Verbindungselement angeordnetes, senkrecht zur Bohrrichtung versetzbares Verriegelungselement.

Damit das erfindungsgemässe Bohrgerät in einem Transportkoffer untergebracht werden kann, ist es notwenig, dass nicht nur die erste Gasfeder, sondern auch die zweite Gasfeder in einer eingefahrenen, vorgespannten Stellung gehalten werden kann. Dies wird vorteilhafterweise dadurch erreicht, dass die zweite Gasfeder einen in Bohrrichtung weisenden Verriegelungsbereich aufweist, der in der zusammengedrückten Stellung der zweiten Gasfeder mit dem Verriegelungselement formschlüssig in Verbindung bringbar ist.

Dadurch, dass vorzugsweise beide Gasfedern lösbar mit dem Gehäuse verbunden sind, ergibt sich die Möglichkeit, das Bohrgerät auch ohne Absaugvorrichtung zu verwenden.

Die Erfindung wird anhand von Zeichnungen, die ein Ausführungsbeispiel wiedergeben, näher erläutert. Es zeigen:
- Fig.1: ein erfindungsgemässes, teilweise dargestelltes Bohrgerät mit einer Absaugvorrichtung und zwei vollständig ausgefahrenen Gasfedern; teilweise geschnitten;
- Fig. 2: das Bohrgerät gemäss Fig. 1; nur eine Gasfeder ist vollständig ausgefahren;
- Fig. 3: das Bohrgerät gemäss Fig. 1; beide Gasfedern sind vollständig eingefahren;
- Fig. 4: einen Schnitt entlang der Linie IV-IV gemäss Fig. 3.

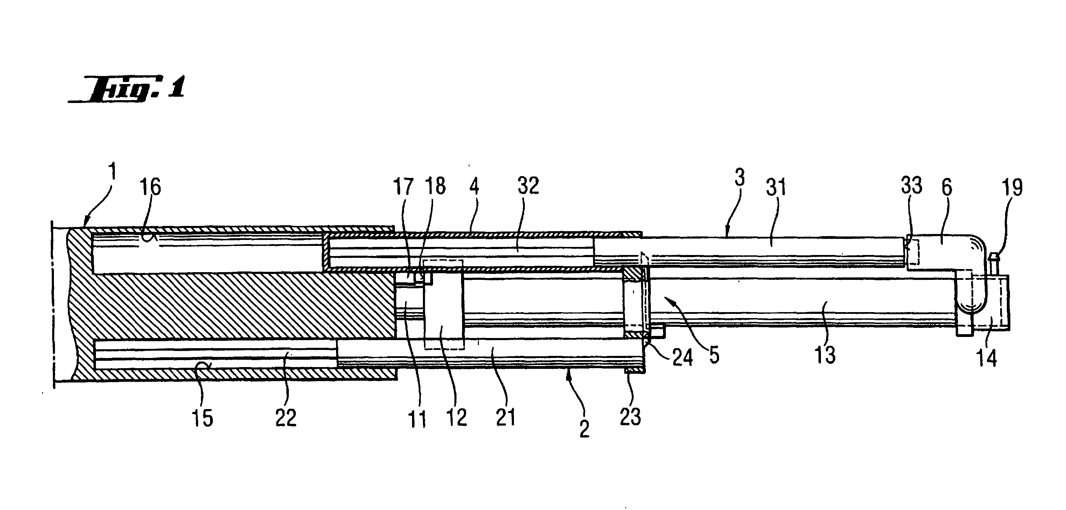

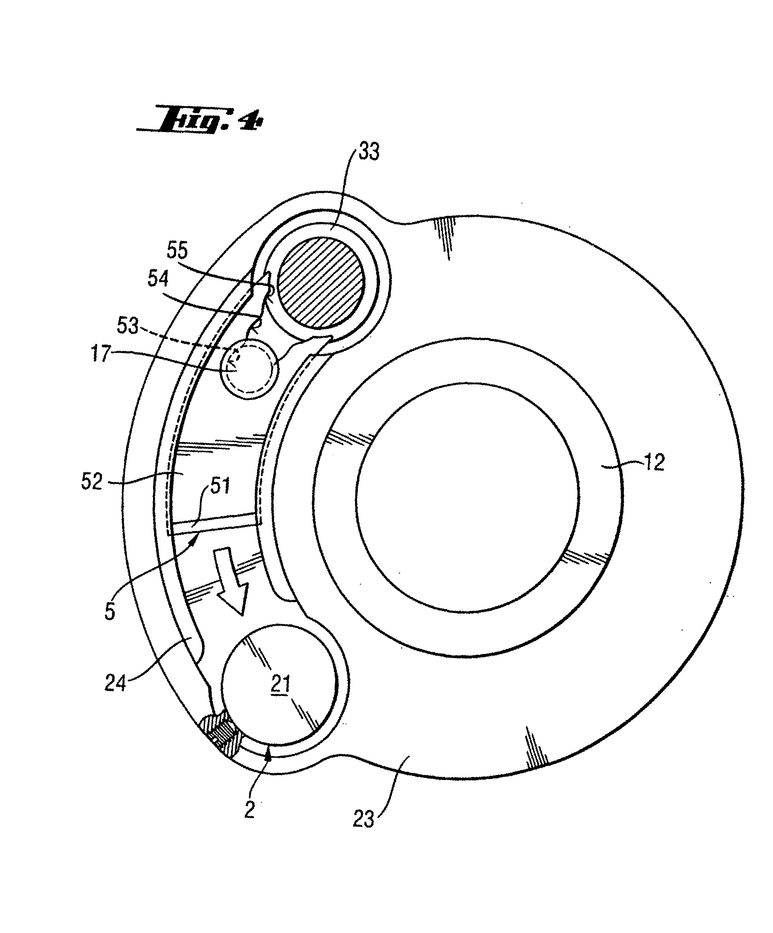

Das in den Fig. 1 bis 3 dargestellte Bohrgerät weist ein Gehäuse 1, eine Abtriebswelle 11 - und eine Werkzeugaufnahme 12 auf, in der ein Werkzeug 13 eingesetzt ist. Dieses Werkzeug 13 weist einen rohrförmigen Trägerkörper und nicht dargestellte Schneidelemente an dessen bohrrichtungsseitigem Endbereich auf.

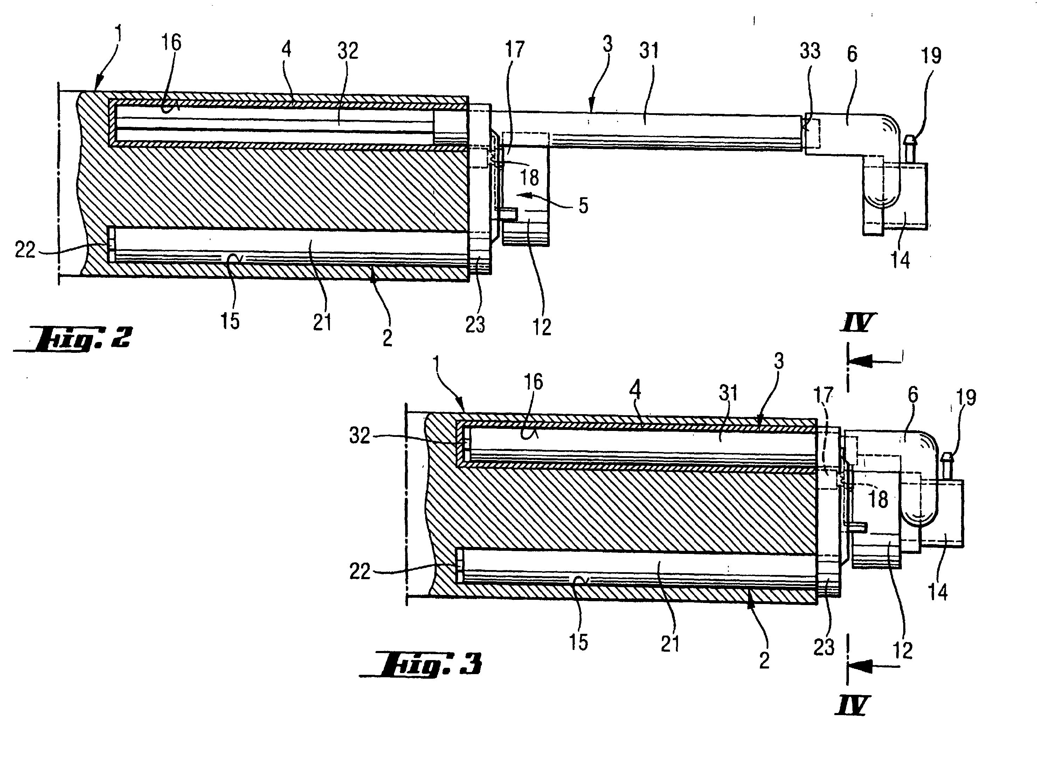

Das Gehäuses 1 des Bohrgerätes weist zwei parallel zueinander angeordnete, parallel zur Bohrrichtung ausgerichtete Aufnahmeöffnungen 15, 16 mit unterschiedlichen Durchmessern auf. Diese Aufnahmeöffnungen 15, 16 sind zumindest in Bohrrichtung offen ausgebildet. Eine erste, einen kleineren Durchmesser aufweisende Aufnahmeöffnung 15 dient der Aufnahme einer ersten Gasfeder 2, wobei der Durchmesser der Aufnahmeöffnung 15 im wesentlichen dem Aussendurchmesser eines Zylinders 21 der ersten Gasfeder 2 entspricht. Diese Gasfeder 2 ragt mit einer Kolbenstange 22 voran in die Aufnahmeöffnung und stützt sich mit der Kolbenstange 22 an einer bohrrichtungsseitigen Anschlagfläche der Aufnahmeöffnung 15 ab. Im auseinandergefahrenen Zustand gemäss Fig. 1 ragt der Zylinder 21 der ersten Gasfeder 2 zum Zweck einer genauen Führung teilweise in die Aufnahmeöffnung 15. Im zusammengefahrenen Zustand ragt nur ein kleiner bohrrichtungsseitiger Abschnitt des Zylinders 21 aus der Aufnahmeöffnung 15 heraus. Dieser kleine Abschnitt steht in fester Verbindung mit einem Verbindungselement 23, beispielsweise in Form eines Joches. Entgegen der Bohrrichtung ragt von diesem Verbindungselement 23 eine Aufnahmehülse 4 ab, deren Aussendurchmesser im wesentlichen dem Durchmesser der zweiten Aufnahmeöffnung 16 im Gehäuse 1 des Bohrgerätes entspricht. Der Innendurchmesser dieser Aufnahmehülse 4 entspricht im wesentlichen dem Aussendurchmesser eines Zylinders 31 einer zweiten Gasfeder 3. Diese zweite Gasfeder 3 ragt mit einer Kolbenstange 32 voran in die in Bohrrichtung offene Aufnahmehülse 4 und stützt sich entgegen der Bohrrichtung mit ihrer Kolbenstange 32 an einer in Bohrrichtung weisenden Anschlagfläche der Aufnahmehülse 4 ab. Im auseinandergefahrenen Zustand gemäss Fig. 1 und 2 ragt der Zylinder 31 der zweiten Gasfeder 3 zum Zwecke einer guten Führung teilweise in die Aufnahmehülse 4. Auch die Aufnahmehülse 4 ragt zum Zwecke einer guten Führung im auseinandergefahrenen Zustand der zweiten Gasfeder 3 teilweise in die zweite Aufnahmeöffnung 16 des Gehäuses 1. Der bohrrichtungsseitige Endbereich des Zylinders 31 der zweiten Gasfeder 3 steht über ein Anschlusselement 6 mit der Absaugvorrichtung 14 in Form eines Absaugkopfes in Verbindung. Die Absaugvorrichtung 14 weist einen Absaugstutzen 19 auf, der mit einer nicht dargestellten externen Vorrichtung zur Erzeugung eines Unterdruckes in Verbindung bringbar ist.

Von dem bohrrichtungsseitigen freien Ende des Gehäuses 1 ragt ein Verriegelungsbolzen 17 ab, mit einer entgegen der Bohrrichtung weisenden Anschlagkante 18. Der Abstand zwischen dieser Anschlagkante 18 und dem bohrrichtungsseitigen freien Ende des Gehäuses entspricht im wesentlichen der Erstreckung des Verbindungselementes 23 parallel zur Bohrrichtung. Die Anschlagkante 18 wird von der ringförmigen Seitenfläche einer den Verriegelungsbolzen 18 umgebenden Nut gebildet. Der Verriegelungsbolzen durchsetzt eine Durchtrittsöffnung des Verbindungselementes 23 und überragt das Verbindungselement 23 bohrrichtungsseitig. Auf der bohrrichtungsseitigen Oberfläche ist das Verbindungselement 23 mit zwei einander sich im wesentlichen gegenüberliegenden Führungsbereichen 24 versehen, die sich über einen Teil des Umfanges zweier Kreise mit unterschiedlichen Durchmessern erstrecken. Entlang dieser Führungsbereiche 24 ist ein Verriegelungselement 5 in einer senkrecht zur Bohrrichtung verlaufenden Ebene zwischen drei verschiedenen Rastpositionen verschiebbar.

Das Verriegelungselement 5 weist einen im wesentlichen plattenförmigen Grundkörper 52, eine von Hand erfassbare Handhabe 51 an einem ersten freien Ende des Grundkörpers 52 und eine zu einem zweiten freien Ende des Grundkörpers 52 hin offene Öffnung auf, die sich aus drei hintereinander angeordneten kreisförmigen Durchtrittsöffnungen 53, 54, 55 zusammensetzt. Die dem zweiten freien Ende des Grundkörpers 52 näher liegende kreisförmige Durchtrittsöffnung 55 weist einen Durchmesser auf, der grösser ist als der Durchmesser des von dem Gehäuse 1 abragenden Verriegelungsbolzens 17. Die beiden weiteren, kreisförmigen Durchtrittsöffnungen 53, 54 weisen einen Durchmesser auf, der dem Kerndurchmesser der Nut am Verriegelungsbolzen 17 entspricht.

In einer ersten Rastposition befinden sich beide Gasfedem 2, 3 in der eingefahrenen, vorgespannten Stellung und das Verbindungselement 23 liegt an dem bohrrichtungsseitigen freien Ende des Gehäuses 1 an. Die der Handhabe 51 am nächsten liegende, kreisförmige Durchtrittsöffnung 53 wirkt formschlüssig mit der Nut zusammen und die entgegen der Bohrrichtung weisende Anschlagkante 18 des Verriegelungsbolzens 17 drückt gegen die in Bohrrichtung weisende Oberfläche des Grundkörpers 52. Das freie Ende des Verriegelungselementes 5 ragt in einen Verriegelungsbereich 33 der zweiten Gasfeder 3. Dieser Verriegelungsbereich 33 befindet sich im bohrrichtungsseitigen Endbereich des Zylinders 31 und ist als umlaufende Nut ausgebildet.

In einer zweiten Rastposition befindet sich die erste Gasfeder 2 in der eingefahrenen, vorgespannten Stellung und die zweite Gasfeder 3 in der ausgefahrenen Stellung. Das Verbindungselement 23 liegt an dem bohrrichtungsseitigen freien Ende des Gehäuses 1 an. Die mittlere der drei kreisförmigen Durchtrittsöffnungen 54 wirkt formschlüssig mit der Nut zusammen und die entgegen der Bohrrichtung weisende Anschlagkante 18 des Verriegelungsbolzens 17 drückt gegen die in Bohrrichtung weisende Oberfläche des Grundkörpers 52. Das freie Ende des Verriegelungselementes 5 ist gegenüber dem Zylinder 31 der zweiten Gasfeder 3 zurückversetzt angeordnet.

In einer dritten Rastposition befinden sich beide Gasfedern 2,3 in der ausgefahrenen Stellung. Das mit dem Zylinder 21 der ersten Gasfeder 2 verbundene Verbindungselement 23 ist vom bohrrichtungsseitigen freien Ende des Gehäuses 1 beabstandet angeordnet und wird von dem Verriegelungsbolzen 17 nicht durchsetzt. Die dem freien Ende des Verriegelungselementes 5 am nächsten liegende kreisförmige Durchtrittsöffnung 55 ist koaxial zum Verriegelungsbolzen 17 des Gehäuses 1 angeordnet.

Mittels einer nicht dargestellten, lösbaren Verbindung sind beide Gasfedem 2, 3 zusammen mit dem Verbindungselement 23, dem Verriegelungselement 5 und der Absaugvorrichtung von dem Gehäuse 1 des Bohrgerätes abnehmbar.

## Patentansprüche

1. Bohrgerät mit einem Gehäuse (1), einer Absaugvorrichtung (14) und wenigstens einer mit dem Gehäuse (1) sowie der Absaugvorrichtung (14) zusammenwirkenden ersten Gasfeder (2), deren Wirkrichtung parallel zur Bohrrichtung verläuft, **dadurch gekennzeichnet, dass** das Gehäuse (1) wenigstens eine erste Aufnahmeöffnung (15) aufweist, die der Aufnahme einer Kolbenstange (22) und wenigstens eines Teils eines Zylinders (21) der ersten Gasfeder (2) dient.

2. Bohrgerät nach Anspruch 1, **dadurch gekennzeichnet, dass** sich die Kolbenstange (22) der ersten Gasfeder (2) an einer in Bohrrichtung weisenden Anschlagfläche der ersten Aufnahmeöffnung (15) abstützt und dass der Zylinder (21) der ersten Gasfeder (2) mit der Absaugvorrichtung (14) zusammenwirkt.

3. Bohrgerät nach Anspruch 1 oder 2, **dadurch gekennzeichnet, dass** eine zweite, zur ersten Gasfeder (2) hintereinander geschaltete, mit der Absaugvorrichtung (14) zusammenwirkende Gasfeder (3) vorgesehen ist, wobei die Gasfedern (2, 3) über ein Verbindungselement (23) miteinander in Verbindung stehen.

4. Bohrgerät nach Anspruch 3, **dadurch gekennzeichnet, dass** die zweite Gasfeder (3) in einer von dem Verbindungselement (23) entgegen der Bohrrichtung abragenden Aufnahmehülse (4) angeordnet ist, die wenigstens teilweise Aufnahme in einer zweiten Aufnahmeöffnung (16) des Gehäuses (1) findet.

5. Bohrgerät nach Anspruch 4, **dadurch gekennzeichnet, dass** sich die Kolbenstange (32) der zweiten Gasfeder (3) an einer in Bohrrichtung weisenden Anschlagfläche der Aufnahmehülse (4) abstützt und dass der Zylinder (31) der zweiten Gasfeder (3) mit der Absaugvorrichtung (14) verbunden ist.

6. Bohrgerät nach einem der Ansprüche 3 bis 5, **dadurch gekennzeichnet, dass** das Verbindungselement (23) formschlüssig am Gehäuse (1) festlegbar ist.

7. Bohrgerät nach Anspruch 6, **dadurch gekennzeichnet, dass** der formschlüssigen Verbindung eine entgegen der Bohrrichtung weisende Anschlagkante (18) des Gehäuses (1) und ein an dem Verbindungselement (23) angeordnetes, senkrecht zur Bohrrichtung versetzbares Verriegelungselement (5) dient

8. Bohrgerät nach Anspruch 7, **dadurch gekennzeichnet, dass** die zweite Gasfeder (3) einen in Bohrrichtung weisenden Verriegelungsbereich (33) aufweist, der in der zusammegendrückten Stellung der zweiten Gasfeder (3) mit dem Verriegelungselement (5) formschlüssig in Verbindung bringbar ist.

9. Bohrgerät nach einem der Ansprüche 3 bis 8, **dadurch gekennzeichnet, dass** beide Gasfedern (2, 3) lösbar mit dem Gehäuse (1) verbunden sind.

## Claims

1. Drilling device with a housing (1), a suction apparatus (14) and, interacting with the housing (1) and the suction apparatus (14), at least one first gas spring (2) whose direction of action runs parallel to the drilling direction, **characterised in that** the housing (1) has at least one first accommodation opening (15) serving to accommodate a piston rod (22) and at least one part of a cylinder (21) of the first gas spring (2).

2. Drilling device according to Claim 1, **characterised in that** the piston rod (22) of the first gas spring (2) rests on a stop surface of the first accommodation opening (15), said stop surface facing in the drilling direction, and that the cylinder (21) of the first gas spring (2) interacts with the suction apparatus (14).

3. Drilling device according to Claim 1 or 2, **characterised in that** a second gas spring (3) connected in sequence with the first gas spring (2) and interacting with the suction apparatus (14) is provided, whereby the gas springs (2, 3) are linked to each other via a connecting element (23).

4. Drilling device according to Claim 3, **characterised in that** the second gas spring (3) is arranged in an accommodation sleeve (4) projecting against the drilling direction from the connecting element (23), said accommodation sleeve being at least partially accommodated in a second accommodation opening (16) of the housing (1).

5. Drilling device according to Claim 4, **characterised in that** the piston rod (32) of the second gas spring (3) rests on a stop surface of the accommodation sleeve (4) pointing in the drilling direction and that the cylinder (31) of the second gas spring (3) is linked to the suction apparatus (14).

6. Drilling device according to on of the claims 3 to 5, **characterised in that** the connecting element (23) may be fixed in form-fitting manner to the housing (1).

7. Drilling device according to Claim 6, **characterised in that** a stop edge (18) of the housing (1) facing away from the drilling direction and a locking element (5) displaceable perpendicular to the drilling direction arranged on the connecting element (23) serve to provide the form-fitting connection.

8. Drilling device according to Claim 7, **characterised in that** the second gas spring (3) has a locking region (33) pointing in the drilling direction, which, in the compressed position of the second gas spring (3) may be brought into form-fitting connection with the locking element (5).

9. Drilling device according to one of the claims 3 to 8, **characterised in that** both gas springs (2, 3) are detachably connected to the housing (1).

## Revendications

1. Outil de forage avec un carter (1), un dispositif d'aspiration (14) et au moins un premier ressort à gaz (2) qui coopère avec le carter (1) ainsi qu'avec le dispositif d'aspiration (14) et dont la direction d'action s'étend parallèlement à la direction de forage, **caractérisé en ce que** le carter (1) comporte au moins un premier orifice récepteur (15) qui sert à recevoir la tige de piston (22) et au moins une partie d'un cylindre (21) du premier ressort à gaz (2).

2. Outil de forage selon la revendication 1, **caractérisé en ce que** la tige de piston (22) du premier ressort à gaz (2) prend appui sur une surface de butée, tournée dans la direction de forage, du premier orifice récepteur (15), et **en ce que** le cylindre (21) du premier ressort à gaz (2) coopère avec le dispositif d'aspiration (14).

3. Outil de forage selon la revendication 1 ou 2, **caractérisé en ce qu'**il est prévu un second ressort à gaz (3) qui intervient à la suite du premier ressort à gaz (2) et qui coopère avec le dispositif d'aspiration (14), les ressorts à gaz (2, 3) étant reliés entre eux par l'intermédiaire d'un élément de liaison (23).

4. Outil de forage selon la revendication 3, **caractérisé en ce que** le second ressort à gaz (3) est disposé dans une douille de réception (4) qui dépasse de l'élément de liaison (23) à l'opposé de la direction de forage et qui est logée au moins en partie dans un second orifice récepteur (16) du carter (1).

5. Outil de forage selon la revendication 4, **caractérisé en ce que** la tige de piston (32) du second ressort à gaz (3) prend appui sur une surface de butée, tournée dans la direction de forage, de la douille de réception (4), et **en ce que** le cylindre (31) du second ressort à gaz (3) est relié au dispositif d'aspiration (14).

6. Outil de forage selon une des revendications 3 à 5, **caractérisé en ce que** l'élément de liaison (23) peut être immobilisé sur le carter (1) par complémentarité de formes.

7. Outil de forage selon la revendication 6, **caractérisé en ce que** la liaison par complémentarité de formes est réalisée par un bord de butée (18), tourné à l'opposé de la direction de forage, du carter (1) et par un élément de verrouillage (5) disposé sur l'élément de liaison (23) et déplaçable perpendiculairement à la direction de forage.

8. Outil de forage selon la revendication 7, **caractérisé en ce que** le second ressort à gaz (3) comporte une zone de verrouillage (33) qui est tournée dans la direction de forage et qui, dans la position rentrée du second ressort à gaz (3), peut être reliée à l'élément de verrouillage (5) par complémentarité de formes.

9. Outil de forage selon une des revendications 3 à 8, **caractérisé en ce que** les deux ressorts à gaz (2, 3) sont reliés au carter (1) de manière détachable.
